# EUROPÄISCHE PATENTSCHRIFT

(11) **EP 3 229 337 B1**
(45) Veröffentlichungstag und Bekanntmachung des Hinweises auf die Patenterteilung: **11.01.2023**
(21) Anmeldenummer: 17157568.1
(22) Anmeldetag: 23.02.2017
(51) Int. Cl.: H02J 7/00

(54) **LADEGERÄT**
CHARGER
CHARGEUR

(30) Priorität: 07.04.2016 DE 102016205773
(43) Veröffentlichungstag der Anmeldung: 11.10.2017
(73) Patentinhaber: Robert Bosch GmbH, 70442 Stuttgart (DE)
(72) Erfinder: Schmehl, Florian, 73760 Ostfildern (DE); Osswald, Alexander, 70599 Stuttgart (DE)

(56) Entgegenhaltungen:
- EP-A1- 1 699 123
- WO-A2-2013/074485
- DE-A1- 19 616 671
- DE-A1-102014 112 728
- DE-U1-202015 100 680
- US-A- 5 648 712
- US-A1- 2013 163 236
- US-A1- 2014 306 660

## Beschreibung

Die vorliegende Erfindung betrifft ein Haltesystem umfassend ein Ladegerät zur elektrischen Aufladung wenigstens eines Akkupacks einer Handwerkzeugmaschine nach Anspruch 1.

Elektrische Handwerkzeugmaschinen sind grundsätzlich bekannt und werden über einen Netzanschluss mit Strom versorgt. Alternativ ermöglichen Akkugeräte eine hohe Flexibilität beim Arbeiten, da sie insbesondere unabhängig von Netzstrom sind. Auf diese Weise können beispielsweise auch Außenarbeiten bequem durchgeführt werden, so dass bei einem Betrieb einer Handwerkzeugmaschine vielfach vorgesehen ist, Akkupacks einzusetzen.

So stellt beispielsweise die US5648712A eine universell austauschbare und modulare Stromversorgung und ein integriertes Batterieladegerät bereit, das in einer mobilen Umgebung sicher verwendet werden kann oder bequem als alltäglicher, praktischer Ersatz für bestehende Geräte verwendet werden kann. Die Erfindung berücksichtigt die meisten international bekannten physikalischen und elektrischen Konfigurationen für die Versorgungsleistung.

Auch die DE 19616671 A1 offenbart eine Halterung für tragbare Telefone, mit einem lösbaren Adapter zur Aufnahme eines Telefons und zum Verbinden des Telefons mit einer Stromquelle, einem Ladegerät, einer Antenne etc., insbesondere in einem Kraftfahrzeug.

Die US2014306660 betrifft ein Ladesystem, bei dem ein Ladegerät und ein Batteriepaket direkt oder indirekt über ein separates Gerät miteinander verbunden werden können, wobei ein Ladestrom über Stromversorgungsleitungen zu einer Zelle des Batteriepakets fließen kann, wenn das Ladegerät und das Batteriepaket verbunden sind.

In der WO2013074485 wird eine Batterie offenbart, die den Auswirkungen des Eintauchens in Flüssigkeit standhalten kann.

Derartige Akkupacks sind grundsätzlich bekannt und weisen in der Regel eine Mehrzahl von in Parallel- und/oder Reihenschaltung verbundener wiederaufladbare Akkumulatoren, beispielsweise drei in Reihe geschaltete, zylinderförmige Li-Ionen-Zellen mit z.B. je 3,6 V mit einer Gesamtspannung von 10,8 V, auf. Im Rahmen dieser Anmeldung ist unter einem Akkupack somit ein vorzugsweise aus mehreren elektrisch zusammengeschalteten Akkuzellen bestehendes Akkumulatorenpaket zu verstehen, das elektrische Energie speichern kann, die für den Betrieb einer Handwerkzeugmaschine benötigte Energie liefert, und austauschbar in einer Kammer, einer Schnittstelle oder dergleichen der Handwerkzeugmaschine anbringbar ist.

Zum Laden des Akkupacks muss dieses an ein Ladegerät angeschlossen werden, wobei das Ladegerät den zum Aufladen des Akkupacks benötigten Strom über einen Netzanschlusserhält. Hierbei handelt es sich in der Regel um einen Stecker, der in eine Steckdose eingesteckt wird. Derartige Ladegeräte sind grundsätzlich bekannt. Ladegeräte zur Wandmontage besitzen in der Regel Aussparungen am Gehäuseboden über die das Ladegerät an Befestigungselementen, wie beispielsweise Wandschrauben, Haken oder Befestigungsschienen eingehängt werden kann.

Die Befestigungsschienen können mittels linearer oder drehbarer Befestigungsmechanismen mit dem Gerät verriegelt werden. Grundsätzlich erweist sich das Befestigen des Ladegerätes über die Aussparungen am Gehäuseboden oftmals als schwierig, da die Befestigungselemente während der Befestigung nicht sichtbar sind, wodurch das Ladegerät oft verkantet und/oder die Wandoberfläche beschädigt wird. Ferner verweist sich die Montage der Schrauben an denen das Ladegerät befestigt wird als nachteilig, da in der Regel nicht eindeutig definiert ist, wieweit die Schrauben von der Wandoberfläche abstehen müssen. Sind die Schrauben zu tief kann das Ladegerät nicht eingehängt werden, sind die Schrauben nicht weit genug in der Wand, ist die Aufhängung zu lose und das Ladegerät kann leicht herunterfallen. Des Weiteren stellt es sich oft als schwierig heraus die Befestigungselemente in dem erforderlichen Abstand anzubringen.

### Offenbarung der Erfindung

Aufgabe der Erfindung ist es, die oben genannten Nachteile zu verbessern und ein Haltesystem umfassend ein Ladegerät zur elektrischen Aufladung eines Akkupacks einer Handwerkzeugmaschine der eingangs genannten Art bereitzustellen, welches die genannten Nachteile weitestgehend verhindert, eine häufige und einfache Montage und Demontage des Ladegerätes und/oder des Akkupacks ermöglicht und dabei möglichst kostengünstig, schnell und einfach aufgebaut ist.

Diese Aufgabe wird durch ein Haltesystem umfassend ein Ladegerät zur elektrischen Aufladung wenigstens eines Akkupacks einer Handwerkzeugmaschine gemäß Anspruch 1 gelöst. Vorteilhafte Ausgestaltungen, Varianten und Weiterbildungen der Erfindung sind den Unteransprüchen zu entnehmen.

Erfindungsgemäß ist vorgesehen, dass ein Haltesystem ein Ladegerät zur elektrischen Aufladung wenigstens eines Akkupacks einer Handwerkzeugmaschine, sowie eine an einer Oberfläche, insbesondere an einer glatten Wand- oder Tischfläche, befestigbare Halterung aufweist; wobei das Ladegerät wenigstens eine Schnittstelle zur elektrischen und mechanischen Kopplung des Ladegerätes mit einer korrespondierenden Schnittstelle des Akkupacks umfasst und über eine Befestigungsvorrichtung lösbar an der Halterung anbringbar ist; wobei die Befestigungsvorrichtung wenigstens ein Rastmittel an der Halterung und wenigstens ein Rastelement am Ladegerät zum lösbaren Arretieren des Ladegerätes an der Halterung aufweist; und wobei das Ladegerät wenigstens ein Ausgleichselement, vorzugsweise mehrere Ausgleichselemente, insbesondere verstellbare Standfüße und/oder Rippen zum Ausgleichen von Unebenheiten der Oberfläche aufweist. Bei der Erfindung wird somit eine spezielle Halterung verwendet, in welcher das Ladegerät lösbar befestigt werden kann. Diese Halterung ermöglicht somit eine häufige und einfache Montage und Demontage des Ladegerätes.

In einer bevorzugten Ausführungsform weist das Ladegerät wenigstens einen Aufnahmebereich, vorteilhafterweise mehrere Aufnahmebereiche mit jeweils einer Schnittstelle zur Aufnahme des wenigstens einen Akkupacks und/oder einer Handwerkzeugmaschine auf.

Vorteilhafterweise umfasst die Halterung eine Aufnahmefläche, wobei die Aufnahmefläche wenigstens eine Ausnehmung, vorzugsweise zwei Ausnehmungen zur Durchführung von Befestigungsmitteln zum Anbringen der Halterung an der Oberfläche aufweist. In Abhängigkeit von der zur Verfügung stehenden Befestigungsfläche können eine Vielzahl von Befestigungsmittel, beispielsweise Schrauben, Haken oder Nägel verwendet werden.

In einer besonders vorteilhaften Ausführungsform ist das Rastmittel der Halterung vorzugsweise als Rastnut oder Rastnase und das Rastelement des Ladegerätes als jeweils korrespondierende Rastnase oder Rastnut ausgebildet. Dabei ist vorgesehen, dass das Rastelement des Ladegerätes und das Rastmittel der Halterung über einen Bedienhebel miteinander verriegelbar und/oder entriegelbar sind. Aufgrund des einfachen und schnellen Verriegelungsvorganges kann das erfindungsgemäße Ladegerät aus für mobile Anwendungen beispielsweise in Werkstatt-, Baustellen- oder Lastkraftwagen verwendet werden, wobei das Ladegerät bei einer derartigen Verwendung vorteilhafterweise über einen elektrischen Adapter an ein Bordnetz des Kraftfahrzeugs angeschlossen werden kann.

Erfindungsgemäß ist vorgesehen, dass eine Mittelebene der Aufnahmefläche der Halterung mit der Oberfläche einen definierten Winkel ϕ bildet, wobei der Winkel ϕ einen Wert zwischen 1° und 90°, bevorzugterweise zwischen 5° und 70°, besonders bevorzugterweise zwischen 10° und 40° hat. Vorteilhafterweise kann der definierte Winkel ϕ derart ausgewählt werden, das ein durch Gravitation verursachtes selbständiges Lösen und/oder Hinausfallen des wenigstens einen eingesteckten Akkupacks verhindert wird.

Auf diese Weise kann eine sichere Fixierung der des eingesteckten Akkupacks und/ oder des in die Halterung eingerasteten Ladegerätes gewährleistet werden, wodurch beispielsweise eine Verwendung des Ladegerätes im Hochbau ermöglicht werden kann. Alternativ kann Ladegerät mittels der Halterung auf einer horizontalen Platte z.B. als Tischmontage befestigt werden, wodurch auch die im Ladegerät eingesteckten Akkupacks im Vergleich zu lose herumliegenden Akkupacks besser vor unbeabsichtigten Stürzen gesichert werden können.

Ferner ist vorgesehen, dass die Halterung des Ladegerätes wenigstens ein in seiner Ausrichtung zur Oberfläche verstellbares Winkelelement aufweist. Vorteilhafterweise umfasst das Winkelelement eine verstellbare Platte und/oder verstellbare Standfüße zur manuellen Anpassung des Winkels ϕ.

Bevorzugterweise weist das Ladegerät wenigstens einen weiteren Aufnahmebereich zur mechanischen Kopplung und/oder wenigstens eine weitere Schnittstelle, beispielsweise eine USB-Schnittstelle, zur elektrischen Übermittlung von Daten auf, wobei die Übermittlung von Daten des Ladegerätes und/oder des Akkupacks mit einer Schnittstelle einer externen Einheit vorteilhafterweise drahtgebunden oder drahtlos erfolgen kann. Dabei ist es von Vorteil, wenn die externe Einheit ferner vom Ladegerät über die zusätzliche elektrische Schnittstelle geladen werden kann, wobei der weitere Aufnahmebereich zur mechanischen Kopplung der externen Einheit wahlweise montiert oder demontiert werden kann. Vorteilhafterweise wird über die externe Einheit, insbesondere über ein Display der externen Einheit, eine Darstellung der übermittelten Daten und/oder eine Steuerung des Ladegerätes und/oder des Akkupacks ermöglicht, wobei in bevorzugten Ausführungsformen die externe Einheit ein Smartphone oder eine elektronische Datenverarbeitungsanlage ist.

In einer besonders bevorzugten Ausführungsform weist das Ladegerät ferner ein Funkmodul zur Datenübertragung auf; wobei das Funkmodul ein Funksignal, ein Bluetooth-Signal, insbesondere Bluetooth Low Energy Signal, ein WLAN-Signal, ein optisches Signal oder ein akustisches Signal an eine externe Einheit und/oder an wenigstens eine Handwerkzeugmaschine empfängt und/oder sendet, so dass das Ladegerät über eine in die Halterung eingebaute Elektronik mit anderen in der Umgebung vorhandenen Handwerkzeugmaschinen drahtlos kommunizieren und deren Daten auf der externen Einheit darstellen kann. Vorteilhafterweise können diese Daten über das Funkmodul auch direkt in ein Netz beispielsweise ein Firmenintranet oder das Internet eingespeist werden.

Als Akkuzellen für das Akkupack können verschiedene Akkumulatorentypen mit unterschiedlichen Materialien, wie beispielsweise Lithium-Ionen (Li-Ion),Nickel-Cadmium (NiCd), Nickel-Metallhydrid (NiMH) oder Lithium-Polymer (LiPo), unterschiedlichen Bauformen, zum Beispiel runde, prismatische oder eckige, oder andere alternative Systeme, wie beispielsweise Brennstoffzellen, verwendet werden. Vorzugsweise werden insbesondere Lithiumionenzellen angewandt, da es insbesondere bei Lithiumionenzellen möglich ist, mehrere Akkuzellen zu Akkuzellenblöcken zusammenzufassen, in denen mehrere Akkuzellen in einer Parallelschaltung verbunden sind.

Das erfindungsgemäße Haltesystem für ein Ladegerät kann auch in einem Werkzeugsystem vorgesehen sein, so dass auch ein Werkzeugsystem umfassend wenigstens ein Akkupack, eine Handwerkzeugmaschine und ein Ladegerät zum Aufladen eines Akkupacks einer Handwerkzeugmaschine einen weiteren Gegenstand der Erfindung bildet.

Unter einer Handwerkzeugmaschine sollen generell sämtliche Handwerkzeugmaschinen mit einem in Bewegung, beispielsweise in Rotation und/oder Schwingung versetzbaren Werkzeugträger, der von einem Antriebsmotor antreibbar ist, wie beispielsweise Stabschrauber, Akku-Bohrer, Schlagbohrmaschinen, Multifunktionswerkzeuge, und/ oder Bohrschrauber verstanden werden. Unter Übertragung elektrischer Energie soll in diesem Zusammenhang insbesondere verstanden werden, dass die Handwerkzeugmaschine über einen Akku und/oder über eine Stromkabelanbindung mit Energie versorgt wird.

Unter einem Elektromotor sollen ganz allgemein alle Arten von elektrischen Verbrauchern, wie zum Beispiel ein EC-Motor, ein Linearantrieb, eine Lampe, eine Pumpe, ein Lüfter, ein Kompressor oder dergleichen verstanden werden. Der Vorteil der bürstenlose EC-Motoren liegt unter anderem darin, dass sie zum einen nahezu wartungsfrei sind und durch ihren hohen Wirkungsgrad während eines Akkubetriebes eine längere Arbeitszeit pro Akkuladung ermöglichen, wodurch sie besonders effizient sind. Ferner können Handwerkzeugmaschinen mit EC-Motoren sehr kompakt und leicht gebaut werden, wobei es besonders vorteilhaft ist, dass auch weniger Wärmeverluste entstehen, wodurch die Geräte nicht so heiß werden wie vergleichbare Geräte, und damit langlebiger sind.

Weitere Merkmale, Anwendungsmöglichkeiten und Vorteile der Erfindung ergeben sich aus der nachfolgenden Beschreibung der Ausführungsbeispiele der Erfindung, welche in den Figuren dargestellt sind. Dabei ist zu beachten, dass die dargestellten Merkmale nur einen beschreibenden Charakter haben und auch in Kombination mit Merkmalen anderer oben beschriebener Weiterentwicklungen verwendet werden können und nicht dazu gedacht sind, die Erfindung in irgendeiner Form einzuschränken.

### Zeichnungen

Die Erfindung wird im Folgenden mit Bezug auf die beigefügten Figuren genauer beschrieben, wobei für gleiche Merkmale gleiche Bezugszeichen verwendet werden. Die Zeichnungen sind schematisch und zeigen:
- Fig. 1: beispielhaft eine perspektivische Ansicht eines erfindungsgemäßen Haltesystems mit einem Ladegerät mit zwei eingesteckten Akkupacks;
- Fig. 2: eine perspektivische Frontansicht einer Halterung des erfindungsgemäßen Haltesystems mit einem Ladegerät aus Fig. 1;
- Fig. 3: einen Schnitt durch eine perspektivische Rückansicht der Halterung aus Figur 2;
- Fig. 4: eine perspektivische Draufsicht auf das Ladegerät aus Figur 1 ohne Halterung;
- Fig. 5: eine perspektivische Unteransicht auf das Ladegerät aus Figur 4; und
- Fig. 6: eine perspektivische Schnittdarstellung eines erfindungsgemäßen Haltesystems mit einem Ladegerät.

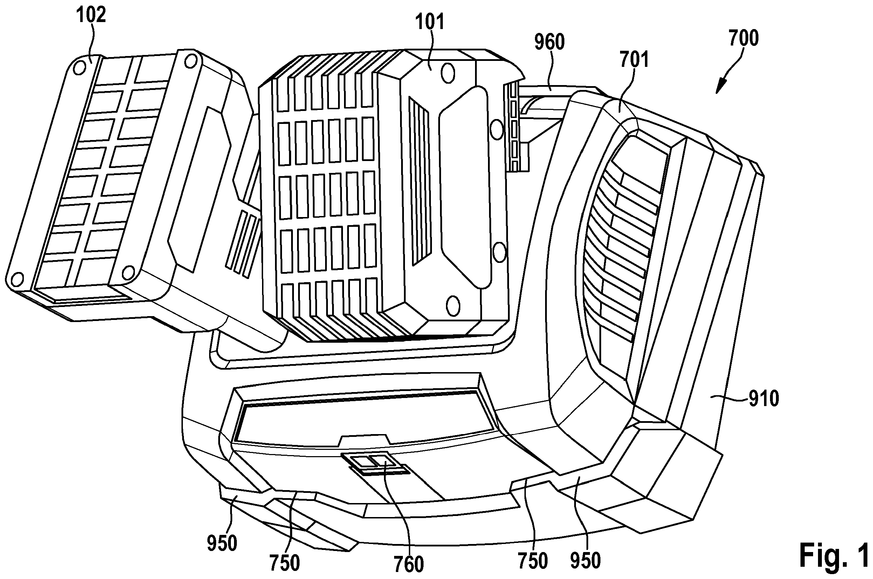

Die Figur 1 zeigt eine perspektivische Ansicht eines erfindungsgemäßen Ladegerätes 700 mit zwei eingesteckten Akkupacks 101, 102 einer nicht dargestellten Handwerkzeugmaschine 300. Das Ladegerät 700 weist einen Hauptkörper 701 und eine Halterung 910 auf. Die in Figur 1 dargestellten Akkupacks 101, 102 sind als Schiebeakkupack ausgeführt. Zum lösbaren Anbringen der Akkupacks 101, 102 an dem Ladegerät 700 weisen die Akkupacks 101, 102 jeweils eine Schnittstelle zur lösbaren mechanischen und elektrischen Verbindung mit einer korrespondierenden Schnittstelle der Handwerkzeugmaschine oder einer korrespondierende Schnittstelle 780 des Ladegerätes 700 auf. Beim Anbringen der Akkupacks 101, 102 werden Aufnahmemittel, z. B. Führungsnuten und Führungsrippen des Ladegerätes 700 zur Aufnahme der korrespondierenden Führungselemente der Akkupacks 101, 102 mit diesen in Eingriff gebracht, wobei die Akkupacks 101, 102 entlang der Aufnahmemittel eingeführt und die jeweiligen Schnittstellen der Akkupacks 101, 102 in die korrespondierenden Schnittstellen 780 des Ladegerätes 700 geschoben werden. Über die Schnittstellen 780 können die Akkupacks 101, 102 und/oder der Handwerkzeugmaschine dem Ladegerät 700 zugeordnet werden.

Zum Kontaktieren der Akkupacks 101, 102 mit dem Ladegerät 700 werden die Akkupacks 101, 102 jeweils in einen Aufnahmebereich 710, 720 eingeführt, wobei es von Vorteil ist, wenn das Ladegerät 700 mehrere unterschiedliche Aufnahmebereiche 710, 720 mit jeweils einer Schnittstelle 780 zur Aufnahme des wenigstens einen Akkupacks 101, 102 und/oder einer Handwerkzeugmaschine 300 aufweist. In der in der Figur 1 gezeigten Position sind zwei unterschiedliche Akkupacks 101, 102 dargestellt, die jeweils in eine Aufnahmebereich 710, 720 zur Aufladung am Ladegerät 700 eingeführt wurden. Dabei ist es von Vorteil, wenn beim Anbringen der Akkupacks 101, 102 in die jeweils korrespondierende Schnittstellen 780 des Ladegerätes 700 jeweils ein nicht näher dargestelltes Verriegelungselement der Akkupacks 101, 102 mit einer nicht näher gezeigten korrespondierenden Aufnahme am Ladegerät 700 in Eingriff gebracht wird.

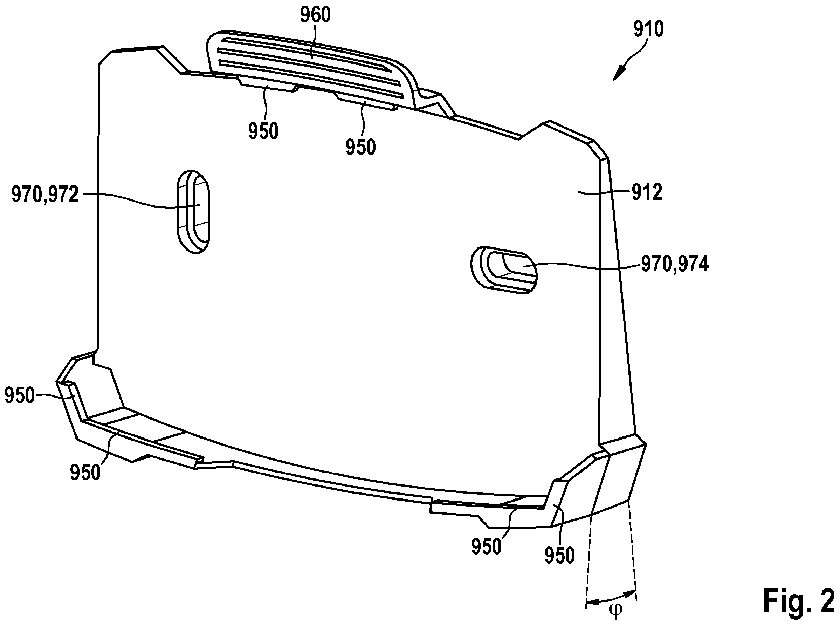

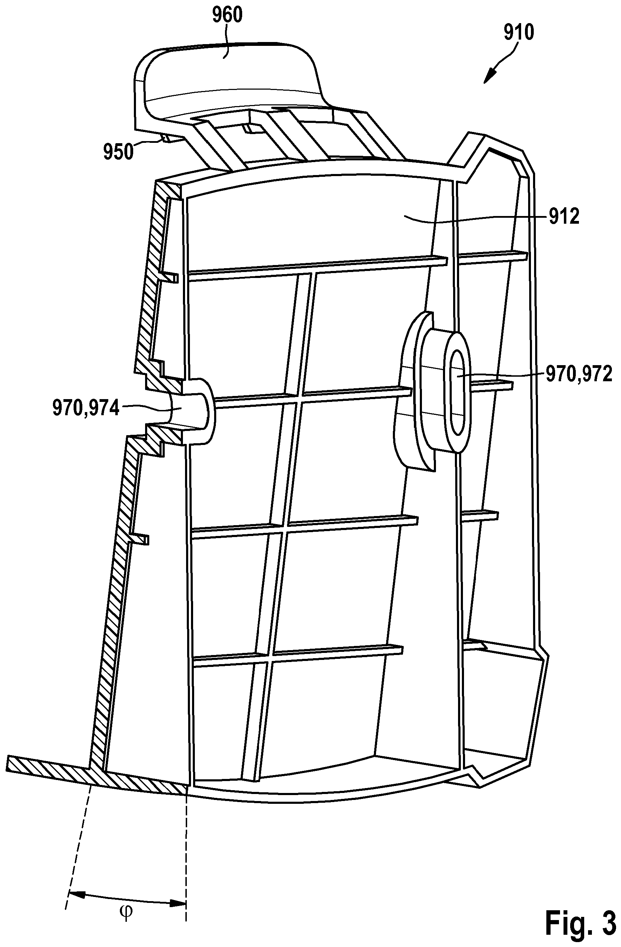

Der Hauptkörper 701 des Ladegerätes 700 ist im dargestellten montierten Zustand lösbar über eine Befestigungsvorrichtung mit der Halterung 910 verbunden, wobei die Halterung 910 selber an einer nicht dargestellten Oberfläche, beispielsweise einer glatten Wand- oder Tischfläche befestigt wird. Wie in den Figuren 2 und 3 dargestellt, weist die Halterung 910 eine Aufnahmefläche 912 auf, wobei die Aufnahmefläche 912 wenigstens eine Ausnehmung 970 vorzugsweise zwei Ausnehmungen 970 zur Durchführung von Befestigungsmitteln aufweist, so dass die Halterung 910 an der Oberfläche angebracht werden kann. In Abhängigkeit von der zur Verfügung stehenden Oberfläche können eine Vielzahl von Befestigungsmitteln, beispielsweise Schrauben, Haken oder Nägel verwendet werden. Vorteilhafterweise sind die Ausnehmungen 970 oval bzw. schlitzförmig ausgeführt und um circa 90° versetzt angeordnet, so dass ein horizontaler und ein vertikaler Versatz durch die Ausnehmungen 970 und die Befestigungsmittel ausgeglichen werden kann.

In einer nicht dargestellten alternativen Ausführungsform weist die Aufnahmefläche 912 nur eine Ausnehmung 970 auf, wobei die eine Ausnehmung 970 oval bzw. schlitzförmig ausgeführt ist und wenigstens einen horizontalen Abschnitt und wenigstens einen vertikalen Abschnitt aufweisen.

Ferner können während einer Montage der Halterung 910 Bohrlochpositionen durch die ovalen bzw. schlitzförmigen Ausnehmungen 970 mit Hilfe der sichtbaren Ausnehmungen 970 einfach markiert werden. Anschließend kann mit Hilfe der ovalen bzw. schlitzförmigen Ausnehmungen 970 während der Anbringung der Halterung 910 an der Oberfläche eine Feinjustierung durchgeführt werden. Durch die Ausgestaltung der Halterung 910 kann somit eine einfache und schnelle Montage der Halterung 910 auf einer Oberfläche gewährleistet werden.

Wie in den Figuren 2 und 3 ferner dargestellt bildet eine Mittelebene der Aufnahmefläche 912 der Halterung 910 mit der Oberfläche einen definierten Winkel ϕ bildet, wobei der Winkel ϕ einen Wert zwischen 1° und 90°, bevorzugterweise zwischen 5° und 70°, besonders bevorzugterweise zwischen 10° und 40° hat. Der Winkel ϕ kann dabei entweder beim Kauf der Halterung 910 durch den Benutzer ausgewählt werden oder durch wenigstens ein in seiner Ausrichtung zur Oberfläche verstellbares nicht im Detail dargestelltes Winkelelement, eine verstellbare Platte und/oder verstellbare Standfüße manuell angepasst werden. Alternativ oder zusätzlich kann die Halterung 910 ein Ausgleichselement 770, vorzugsweise mehrere Ausgleichselemente 770 aufweisen, so dass der Benutzer durch eine manuelle Verstellung der Ausgleichselemente 770 mittels nicht im Detail dargestellter verstellbarer Standfüße und/oder Rippen Unebenheiten der Oberfläche manuell angepasst werden können. Dabei ist es von Vorteil, dass eine Mittelebene der Aufnahmefläche 912 der Halterung 910 mit der Oberfläche einen definierten Winkel ϕ bildet, wobei der Winkel ϕ einen Wert zwischen 1° und 90°, bevorzugterweise zwischen 5° und 70°, besonders bevorzugterweise zwischen 10° und 40° hat. Vorteilhafterweise kann der definierte Winkel ϕ derart ausgewählt werden, dass ein durch Gravitation verursachtes selbständiges Lösen und/oder Hinausfallen des Ladegerätes 700 und/oder der eingesteckten Akkupacks 101, 102 verhindert wird. Durch die angewinkelte Positionierung des Ladegerätes 700 wird mittels der Halterung 910 erreicht, dass die eingesteckten Akkupacks 101, 102 sowohl bei einer horizontalen Positionierung auf einer ebenen Fläche wie beispielsweise einer Werkbank oder einem Tisch als auch bei einer Wandmontage eine optimal ausgerichtet sind und nicht selbstständig und unter Einfluss der Gravitation aus den Aufnahmebereichen 710, 720 herausfallen können.

Die Halterung 910 weist zum lösbaren Arretieren des Hauptkörpers 701 des Ladegerätes 700 an der Halterung 910 das wenigstens eine Rastmittel 950 auf. Entsprechend weist das Ladegerät das wenigstens eine Rastelement 750 auf, wobei das Rastelement 750 das Ladegerät 700 in einem in der Halterung 910 montierten Zustand in das wenigstens eine korrespondierende Rastmittel 950 der Halterung 910 eingreift, so dass durch einen Schnappmechanismus der Hauptkörper 701 des Ladegerätes 700 an der Halterung 910 fixiert und mittels eines Betätigungselementes 960 wieder von der Halterung 910 gelöst werden kann.

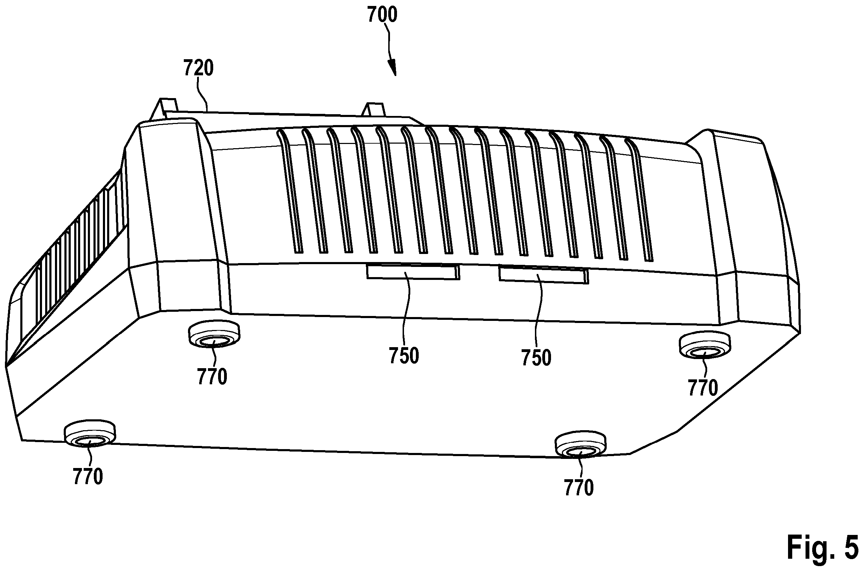

Insbesondere in den Figuren 2 bis 5 dargestellten Ausführungsformen ist das Rastmittel 950 der Halterung 910 als Rastnut oder Rastnase und das Rastelement 750 des Ladegerätes 700 als jeweils korrespondierende Rastnase oder Rastnut ausgebildet. Aufgrund des Verriegelungskonzeptes zwischen dem Ladegerät 700 und der Halterung 910 kann das Ladegerät 700 schnell und einfach mit der Halterung 910 verriegelt werden. Hierzu wird das Ladegerät 700 zuerst mit dem dafür vorgesehenen Rastmittel 750, einer Rastnase, in das Rastmittel 950 der Halterung 910, einer Rastnut, eingeführt und dann mittels Rotation bzw. einer Kippbewegung mit einem weiteren Rastmittel 750 der Halterung 910 verriegelt. Durch betätigen des Betätigungselementes 960 löst sich das Rastmittel 750, so dass durch eine erneute Kippbewegung das Ladegerät 700 aus der Halterung 910 gelöst werden kann.

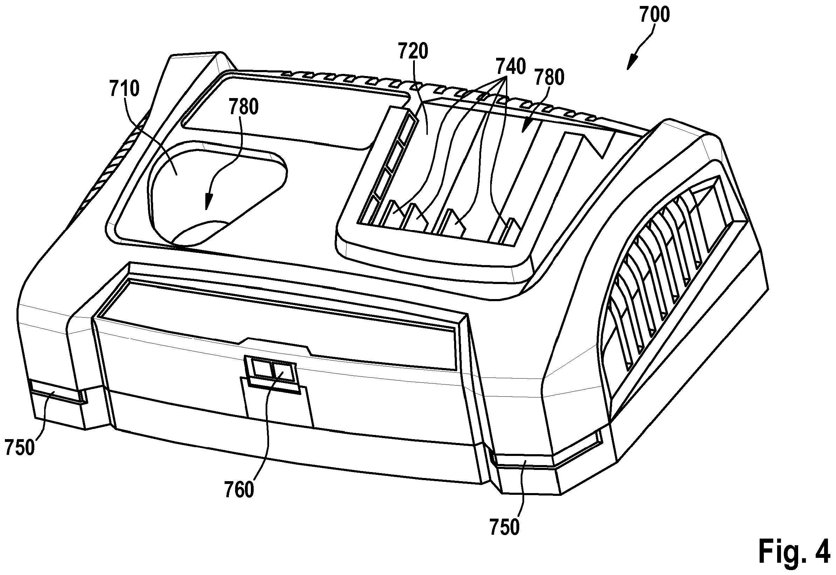

Wie in den Figuren 4 bis 6 dargestellt weist das Ladegerät 700 zudem zwei Aufnahmebereiche 710, 720 zur Aufnahme der Akkupacks 101, 102 auf, wobei das Ladegerät 700 in der dargestellten Ausführungsform zur elektrischen Aufladung der Akkupacks 101,102 mechanisch und elektrisch mit den Akkupacks 101, 102 verbunden ist. Die Aufnahmebereiche 710, 720 weisen zudem jeweils eine zur Schnittstelle 180 des Akkupacks 101, 102 korrespondierende Schnittstelle 780 auf, wobei bei Ladegeräten 700 mit mehreren Aufnahmebereiche 710, 720 orientiert sich der Winkel ϕ der Halterung 910 an dem Akkupack 101, 102 mit der ungünstigsten Position.

Wie in den Figuren 4 bis 6 dargestellt weist das Ladegerät 700 eine weitere Schnittstelle 760, eine USB-Schnittstelle, zur elektrischen, drahtgebundenen Übermittlung von Daten des Ladegerätes 700 und/oder eines der Akkupacks 101, 102 mit einer nicht dargestellten Schnittstelle einer externen Einheit auf. Vorteilhafterweise ist die Schnittstelle 760 derart ausgestaltet, dass eine eingesteckte externe Einheit vom Ladegerät 700 über die zusätzliche elektrische Schnittstelle 760 geladen werden kann. Nicht dargestellt, aber vorteilhafterweise kann ein weiterer Aufnahmebereich zur mechanischen Kopplung der externen Einheit montiert und wieder demontiert werden.

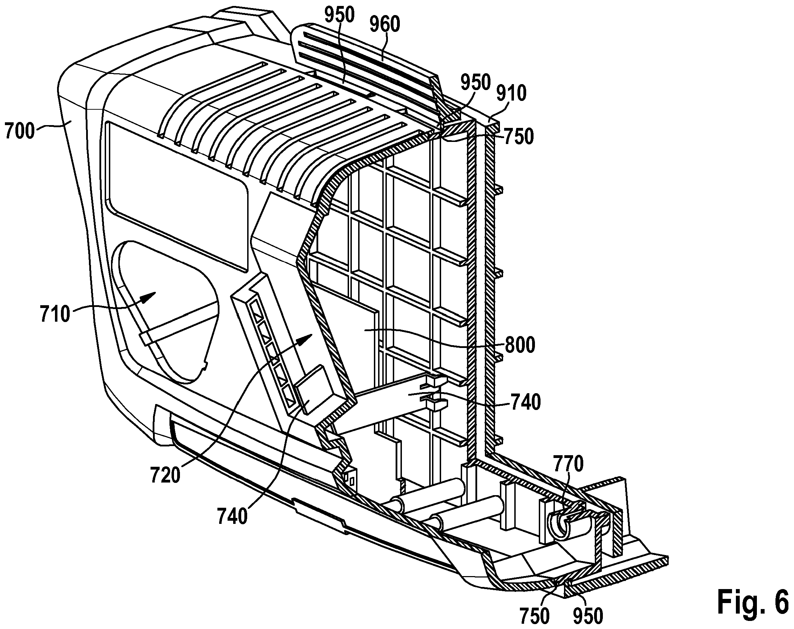

Wie in Figur 6 dargestellt, weist das Ladegerät 700 eine Elektronik 800 auf, wobei diese wiederum ein nicht im Detail dargestelltes Funkmodul zur Datenübertragung umfassen kann. Das Funkmodul kann ein Funksignal, ein Bluetooth-Signal, insbesondere Bluetooth Low Energy Signal, ein WLAN-Signal, ein optisches Signal oder ein akustisches Signal an die externe Einheit und/oder an die wenigstens eine Handwerkzeugmaschine senden und/oder empfangen, so dass das Ladegerät 700 über eine in die Halterung 910 eingebaute Elektronik 800 mit anderen in der Umgebung vorhandenen Handwerkzeugmaschinen drahtlos kommunizieren. Dabei ist denkbar, dass die gesendeten und/ oder empfangenen Daten auf einem Display der externen Einheit darstellbar sind.

Durch die Gestaltung des Ladegerätes 700 mit Halterung 910 wird einerseits eine einfache und schnelle Montage der Halterung 910 an einer Oberfläche und andererseits ein einfaches und schnelles Arretieren des Hauptkörpers 701 des Ladegerätes 700 an der Halterung 910 gewährleistet. Durch die angewinkelte Positionierung des Ladegerätes 700 bei Verwendung der Halterung 910 kann gewährleistet werden, dass das Ladegerät 700 eine weitestgehend optimale Ausrichtung der eingesteckten Akkupacks 101, 102 ermöglicht und ein selbständiges rausfallen der Akkupacks 101, 102 verhindert werden kann.

Obwohl die Erfindung durch die bevorzugten Ausführungsbeispiele im Detail näher erläutert wurde, können vom Fachmann auch andere Kombinationen der genannten Merkmale vorgesehen sein, ohne den Schutzumfang der Erfindung zu verlassen. Der Schutzumfang wird von den Ansprüchen bestimmt.

## Patentansprüche

1. Haltesystem umfassend ein Ladegerät (700) zur elektrischen Aufladung wenigstens eines Akkupacks (101) einer Handwerkzeugmaschine (300), sowie eine an einer Oberfläche befestigbare Halterung (910); wobei das Ladegerät (700) wenigstens eine Schnittstelle (780) zur elektrischen und mechanischen Kopplung des Ladegerätes (700) mit einer korrespondierenden Schnittstelle des Akkupacks (101) umfasst und über eine Befestigungsvorrichtung lösbar an der Halterung (910) anbringbar ist; wobei die Befestigungsvorrichtung wenigstens ein Rastmittel (950) an der Halterung (910) und wenigstens ein Rastelement (750) am Ladegerät (700) zum lösbaren Arretieren des Ladegerätes (700) an der Halterung (910) aufweist; und wobei die Halterung (910) das Haltesystem mehrere Ausgleichselemente (770) in Form von verstellbaren Standfüßen und/ oder Rippen zum Ausgleichen von Unebenheiten der Oberfläche aufweist, **dadurch gekennzeichnet, dass** die Ausgleichselemente an der Halterung (910), verstellbar in Form von Standfüßen und/ oder Rippen zum Ausgleichen von Unebenheiten der Oberfläche ausgebildet sind.

2. Haltesystem nach Anspruch 1, **dadurch gekennzeichnet, dass** das Ladegerät (700) wenigstens einen Aufnahmebereich (710, 720), vorteilhafterweise mehrere Aufnahmebereiche (710, 720) mit jeweils einer Schnittstelle (780) zur Aufnahme des wenigstens einen Akkupacks (101) und/oder einer Handwerkzeugmaschine (300) aufweist.

3. Haltesystem nach Anspruch 1 oder 2, **dadurch gekennzeichnet, dass** die Halterung (910) eine Aufnahmefläche (912) umfasst, wobei die Aufnahmefläche (912) wenigstens eine Ausnehmung (970), vorzugsweise zwei Ausnehmungen (970) zur Durchführung von Befestigungsmitteln zum Anbringen der Halterung (910) an der Oberfläche aufweist.

4. Haltesystem nach einem der Ansprüche 1 bis 3, **dadurch gekennzeichnet, dass** das Rastmittel (950) der Halterung (910) als Rastnut oder Rastnase und das Rastelement (750) des Ladegerätes (700) als jeweils korrespondierende Rastnase oder Rastnut ausgebildet ist.

5. Haltesystem nach Anspruch 3 oder 4, **dadurch gekennzeichnet, dass** das Rastelement (750) des Ladegerätes (700) und das Rastmittel (950) der Halterung (910) über ein Betätigungselement (960) miteinander verriegelbar und/oder entriegelbar sind.

6. Haltesystem nach einem der Ansprüche 1 bis 5, **dadurch gekennzeichnet, dass** eine Mittelebene der Aufnahmefläche (912) der Halterung (910) mit der Oberfläche einen definierten Winkel (ϕ) bildet, wobei der Winkel (ϕ) einen Wert zwischen 1° und 90°, bevorzugterweise zwischen 5° und 70°, besonders bevorzugterweise zwischen 10° und 40° hat.

7. Haltesystem nach Anspruch 6, **dadurch gekennzeichnet, dass** der definierte Winkel (ϕ) derart ausgewählt ist, das ein durch Gravitation verursachtes selbständiges Lösen und/oder Hinausfallen des wenigstens einen eingesteckten Akkupacks (101) verhindert wird.

8. Haltesystem nach einem der Ansprüche 6 oder 7, **dadurch gekennzeichnet, dass** die Halterung (910) wenigstens ein in seiner Ausrichtung zur Oberfläche verstellbares Winkelelement, eine verstellbare Platte und/oder verstellbare Standfüße zur manuellen Anpassung des Winkels (ϕ) aufweist.

9. Haltesystem nach einem der Ansprüche 1 bis 8, **dadurch gekennzeichnet, dass** das Ladegerät (700) wenigstens einen weiteren Aufnahmebereiche zur mechanischen Kopplung und/oder wenigstens eine weitere Schnittstelle (760) zur elektrischen, insbesondere zur drahtgebundenen oder drahtlosen Übermittlung von Daten des Ladegerätes (700) und/oder des Akkupacks (101) mit einer Schnittstelle einer externen Einheit aufweist.

10. Haltesystem nach Anspruch 9, **dadurch gekennzeichnet, dass** über die externe Einheit, insbesondere über ein Display der externen Einheit, eine Darstellung der übermittelten Daten und/oder eine Steuerung des Ladegerätes (700) und/oder des Akkupacks (101) ermöglicht wird.

11. Haltesystem nach Anspruch 9 oder 10, **dadurch gekennzeichnet, dass** die externe Einheit ein Smartphone oder eine elektronische Datenverarbeitungsanlage ist.

12. Haltesystem nach einem der Ansprüche 1 bis 11, **dadurch gekennzeichnet, dass** das Ladegerät (700) ein Funkmodul zur Datenübertragung aufweist; wobei das Funkmodul ein Funksignal, ein Bluetooth-Signal, insbesondere Bluetooth Low Energy Signal, ein WLAN-Signal, ein optisches Signal oder ein akustisches Signal an eine externe Einheit und/oder an wenigstens eine Handwerkzeugmaschine (300) empfängt und/oder sendet.

13. Werkzeugsystem umfassend wenigstens ein Akkupack (101), eine Handwerkzeugmaschine (300) und ein Haltesystem umfassend ein Ladegerät (700) zum Aufladen eines Akkupacks (101) einer Handwerkzeugmaschine (300) nach einem der Ansprüche 1 bis 12.

## Claims

1. Holding system comprising a charger (700) for electrically charging at least one rechargeable battery pack (101) of a handheld power tool (300), and a holder (910) which can be fastened to a surface; wherein the charger (700) comprises at least one interface (780) for electrically and mechanically coupling the charger (700) to a corresponding interface of the rechargeable battery pack (110) and can be detachably attached to the holder (910) by means of a fastening apparatus; wherein the fastening apparatus has at least one latching means (950) on the holder (910) and at least one latching element (750) on the charger (700) for detachably locking the charger (700) to the holder (910); and wherein the holder (910) the holding system has a plurality of compensation elements (770) in the form of adjustable feet and/or fins for compensating for unevennesses of the surface, **characterized in that** the compensation elements are adjustably formed on the holder (910) in the form of feet and/or fins for compensating for unevennesses of the surface.

2. Holding system according to Claim 1, **characterized in that** the charger (7) has at least one receiving region (710, 720), advantageously a plurality of receiving regions (710, 720) each with an interface (780) for receiving the at least one rechargeable battery pack (110) and/or a handheld power tool (300).

3. Holding system according to Claim 1 or 2, **characterized in that** the holder (910) comprises a receiving surface (912), wherein the receiving surface (912) has at least one recess (970), preferably two recesses (970) for fastening means to pass through for attaching the holder (910) to the surface.

4. Holding system according to one of Claims 1 to 3, **characterized in that** the latching means (950) of the holder (910) is in the form of a latching groove or latching lug and the latching element (750) of the charger (700) is in the form of a respectively corresponding latching lug or latching groove.

5. Holding system according to Claim 3 or 4, **characterized in that** the latching element (750) of the charger (700) and the latching means (950) of the holder (910) can be locked to one another and/or unlocked by means of an operating element (960).

6. Holding system according to one of Claims 1 to 5, **characterized in that** a central plane of the receiving surface (912) of the holder (910) forms a defined angle (ϕ) with the surface, wherein the angle (ϕ) has a value of between 1° and 90°, preferably between 5° and 70°, particularly preferably between 10° and 40°.

7. Holding system according to Claim 6, **characterized in that** the defined angle (ϕ) is selected in such a way that the at least one plugged-in rechargeable battery pack (110) is prevented from independently becoming detached and/or falling out due to gravity.

8. Holding system according to either of Claims 6 and 7, **characterized in that** the holder (910) has at least one angle element, the orientation of which with respect to the surface is adjustable, an adjustable plate and/or adjustable feet for manually adapting the angle (ϕ).

9. Holding system according to one of Claims 1 to 8, **characterized in that** the charger (700) has at least one further receiving region for mechanical coupling and/or at least one further interface (760) for electrical, in particular for wired or wireless, transmission of data from the charger (700) and/or the rechargeable battery pack (110) with an interface for an external unit.

10. Holding system according to Claim 9, **characterized in that** display of the transmitted data and/or control of the charger (700) and/or the rechargeable battery pack (101) is rendered possible via the external unit, in particular via a display of the external unit.

11. Holding system according to Claim 9 or 10, **characterized in that** the external unit is a smartphone or an electronic data processing system.

12. Holding system according to one of Claims 1 to 11, **characterized in that** the charger (700) has a radio module for data transmission; wherein the radio module receives and/or emits a radio signal, a Bluetooth signal, in particular a Bluetooth low energy signal, a WLAN signal, an optical signal or an acoustic signal from/to an external unit and/or from/to at least one handheld power tool (300).

13. Tool system comprising at least one rechargeable battery pack (101), a handheld power tool (300) and a holding system comprising a charger (700) for charging a rechargeable battery pack (101) of a handheld power tool (300) according to one of Claims 1 to 12.

## Revendications

1. Système de support, comprenant un chargeur (700) pour la recharge électrique d'au moins un bloc-batterie (101) d'une machine-outil à main (300), ainsi qu'un support (910) pouvant être fixé sur une surface ; dans lequel le chargeur (700) comprend au moins une interface (780) pour l'accouplement électrique et mécanique du chargeur (700) à une interface correspondante du bloc-batterie (101) et peut être installé de manière amovible sur le support (910) par l'intermédiaire d'un dispositif de fixation ; dans lequel le dispositif de fixation présente au moins un moyen d'encliquetage (950) sur le support (910) et au moins un élément d'encliquetage (750) sur le chargeur (700) pour l'encliquetage amovible du chargeur (700) sur le support (910) ; et dans lequel le support (910) le système de support présente plusieurs éléments de compensation (770) sous la forme de pieds et/ou de nervures réglables pour compenser des irrégularités de la surface,
**caractérisé en ce que** les éléments de compensation sur le support (910) sont réalisés de manière réglable au niveau de la forme des pieds et/ou des nervures pour compenser des irrégularités de la surface.

2. Système de support selon la revendication 1, **caractérisé en ce que** le chargeur (700) présente au moins une zone de réception (710, 720), de façon avantageuse plusieurs zones de réception (710, 720) pourvues respectivement d'une interface (780) pour recevoir ledit au moins un bloc-batterie (101) et/ou une machine-outil à main (300).

3. Système de support selon la revendication 1 ou 2, **caractérisé en ce que** le support (910) comprend une surface de réception (912), dans lequel la surface de réception (912) présente au moins un évidement (970), de préférence deux évidements (970), pour le passage de moyens de fixation permettant d'installer le support (910) sur la surface.

4. Système de support selon l'une quelconque des revendications 1 à 3, **caractérisé en ce que** le moyen d'encliquetage (950) du support (910) est réalisé sous la forme d'une rainure d'encliquetage ou d'un ergot d'encliquetage, et l'élément d'encliquetage (750) du chargeur (700) est réalisé sous la forme d'un bec d'encliquetage ou d'une rainure d'encliquetage respectivement correspondant(e).

5. Système de support selon la revendication 3 ou 4, **caractérisé en ce que** l'élément d'encliquetage (750) du chargeur (700) et le moyen d'encliquetage (950) du support (910) sont verrouillables et/ou déverrouillables l'un par rapport à l'autre par l'intermédiaire d'un élément d'actionnement (960).

6. Système de support selon l'une quelconque des revendications 1 à 5, **caractérisé en ce qu'**un plan central de la surface de réception (912) du support (910) forme avec la surface un angle défini (ϕ), dans lequel l'angle (ϕ) présente une valeur comprise entre 1° et 90°, de préférence entre 5° et 70°, de plus grande préférence entre 10° et 40°.

7. Système de support selon la revendication 6, **caractérisé en ce que** l'angle défini (ϕ) est sélectionné de telle sorte qu'un détachement et/ou un échappement provoqué(s) par la gravitation du au moins un bloc-batterie (101) connecté est/sont empêché(s).

8. Système de support selon l'une quelconque des revendications 6 ou 7, **caractérisé en ce que** le support (910) présente au moins un élément angulaire réglable au niveau de son orientation par rapport à la surface, une plaque réglable et/ou des pieds réglables pour l'adaptation manuelle de l'angle (ϕ).

9. Système de support selon l'une quelconque des revendications 1 à 8, **caractérisé en ce que** le chargeur (700) présente au moins une autre zone de réception pour l'accouplement mécanique et/ou au moins une autre interface (760) pour la transmission électrique, en particulier avec ou sans fil, de données du chargeur (700) et/ou du bloc-batterie (101) avec une interface d'une unité externe.

10. Système de support selon la revendication 9, **caractérisé en ce que** par l'intermédiaire de l'unité externe, en particulier par un affichage de l'unité externe, une représentation des données transmises et/ou une commande du chargeur (700) et/ou du bloc-batterie (101) est/sont possible(s).

11. Système de support selon la revendication 9 ou 10, **caractérisé en ce que** l'unité externe est un smartphone ou une installation de traitement de données électronique.

12. Système de support selon l'une quelconque des revendications 1 à 11, **caractérisé en ce que** le chargeur (700) présente un module radio pour la transmission de données ;
dans lequel le module radio reçoit et/ou émet un signal radio, un signal Bluetooth, en particulier un signal Bluetooth Low Energy, un signal WLAN, un signal optique ou un signal acoustique à une unité externe et/ou en provenance ou à destination d'au moins une machine-outil à main (300).

13. Système d'outil comprenant au moins un bloc-batterie (101), une machine-outil à main (300) et un système de support comprenant un chargeur (700) pour recharger un bloc-batterie (101) d'une machine-outil à main (300) selon l'une quelconque des revendications 1 à 12.
